Europäisches Patentamt

European Patent Office

Office européen des brevets

(11) Publication number: **0 297 628 B1**

## EUROPEAN PATENT SPECIFICATION

(45) Date of publication of patent specification: **03.02.93**   (51) Int. Cl.⁵: **B60C 7/12**

(21) Application number: **88111389.8**

(22) Date of filing: **15.04.85**

(60) Publication number of the earlier application in accordance with Art.76 EPC: **0 159 888**

(54) **Non-pneumatic tire.**

(30) Priority: **16.04.84 US 600932**

(43) Date of publication of application:
**04.01.89 Bulletin 89/01**

(45) Publication of the grant of the patent:
**03.02.93 Bulletin 93/05**

(84) Designated Contracting States:
**BE DE FR GB IT NL SE**

(56) References cited:
**EP-A- 0 081 220        FR-A- 2 294 865
FR-A- 2 294 866        FR-A- 2 350 216
US-A- 2 620 844        US-A- 4 226 273
US-A- 4 235 270**

(73) Proprietor: **The Uniroyal Goodrich Tire Company**
**600 South Main Street**
**Akron Ohio 44397-0001(US)**

(72) Inventor: **Page, Giles J.**
**125 Potuccos Ring Road Wolcott**
**New Haven Connecticut 06716(US)**
Inventor: **Palinkas, Richard**
**Campville Road RFD No. 1 Northfield**
**Litchfeld Connecticut 06778(US)**

(74) Representative: **Geldard, David Guthrie et al**
**UROUHART-DYKES AND LORD Tower House**
**Merrion Way**
**Leeds West Yorkshire LS2 8PA(GB)**

## Description

This invention relates to a tire and wheel rim assembly, the tire being non-pneumatic.

Various tire constructions have been devised for use on vehicle wheels over the years with most vehicles having pneumatic tires to provide the desired cushioning. The difficulty with pneumatic tires is that they are subject to punctures and cannot be operated in the deflated condition for an appreciable distance. Cushioning devices have been placed inside pneumatic tires to support the tires in the deflated condition, thereby providing a "run-flat" capability. However, the heat generated during such run-flat operation limits the distance that such a tire can go in the deflated condition.

Non-pneumatic tires have also heretofore been used on vehicle wheels over the years, for example as automotive spare tires, industrial tires, off-the-road tires, bicycle tires, wheel barrow tires, and the like. They have not been completely satisfactory in these applications because they have not heretofore had suitable cushioning and handling characteristics. Similarly, in the past it has been difficult to provide for a variable spring rate in such tires without changing the type of materials used therein. Also, where the non-pneumatic tires have been solid tires, heat build up and subsequent degradation of the elastomeric materials comprising the tires have severely limited the uses to which such tires could be put.

One example of a non-pneumatic tire and wheel rim assembly is shown in FR-A-2350216, and is taken as the starting point for claim 1 herein.

Although various types of supporting and cushioning wall structures have been employed in non-pneumatic tires, such structures have not been capable of allowing the tire both to deform locally and to achieve its load bearing capacity in a manner approximating the manner in which a pneumatic tire achieves the same. The invention seeks to provide a tire and wheel rim assembly having such an improved non-pneumatic tire.

According to the present invention a tire and wheel rim assembly as aforesaid is characterised as set forth in claim 1.

The combination set forth in claim 1 provides a structure that has a performance approximating that of a pneumatic tire and wheel rim assembly.

The invention will be better understood from the following description of assemblies in accordance therewith, given by way of example only, in conjunction with the accompanying drawings, in which:

Figure 1 is a side elevation view of a non-pneumatic tire and rim assembly embodying the invention;

Figure 2 is an enlarged fragmentary view of a portion of the tire and rim assembly shown in Figure 1, showing the intermediate load-carrying and cushioning structure thereof in greater detail;

Figure 3 is a sectional elevation view, taken along the line 3-3 of Figure 2;

Figure 4 is a sectional elevation view taken along the line 4-4 of Figure 1, but showing the tire and rim assembly at a stage of manufacture before a tread has been added thereto and while the tire and rim assembly is still in the mold in which it is formed;

Figure 5 is a sectional elevation view, taken along the line 5-5 of Figure 4, showing the manner in which inserts are mounted in the mold to form the rib members;

Figure 6 is a view similar to Figure 2, illustrating a second embodiment of tire and rim assembly;

Figure 7 is a sectional elevation view, taken along the line 7-7 of Figure 6;

Figure 8 is a sectional elevation of a tire and rim assembly similar to the view shown in Figure 7 but illustrating an alternative method of securing the tire to the rim assembly;

Figure 9 is a sectional elevation view similar to the view shown in Figure 8 illustrating yet another arrangement for securing the tire to the rim assembly; and

Figure 10 is a fragmentary elevational view, taken along the line X-X of Figure 9, showing a tongue and groove interlocking arrangement for non-rotatively mounting a tire on the rim assembly.

The term "elastomer", "elastomers", and "elastomeric material", as used herein, have reference to materials useful for making non-pneumatic tires and having the following characteristics: A shore hardness of 80A to 50D and a compression modulus (at 0.5 shape factor and 10% compression) of $6.9 \times 10^3$ to $344 \times 10^3$kPa. In a more preferred version of the invention the compression modulus will be from $20.7 \times 10^3$ to $62.1 \times 10^3$kPa. Examples of materials useful for making the non-pneumatic tire of this invention comprise the following: polyurethane, natural rubber, polybutadiene, polyisoprenes, ethylenepropylene-non-conjugated diene terpolymer, copolymers of butadiene with acrylonitrile and with methacrylonitrile, styrenes and acrylates. The most preferred elastomer for use in this invention is polyurethane.

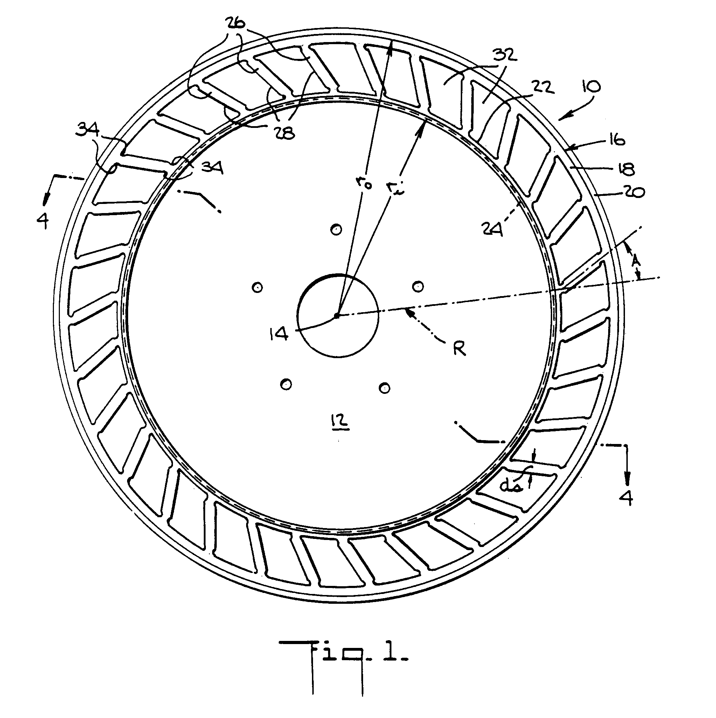

Referring to Figures 1, 2 and 3 wherein a preferred embodiment of this invention is illustrated, a tire 10 is shown mounted on a wheel 12 for rotation about an axis 14. The tire 10 comprises an annular body 16 of resilient elastomeric material having an outer cylindrical member 18 at the outer periphery thereof on which a tread 20 may be mounted. The annular body 16 is also provided with an inner cylindrical member 22 at its inner periphery which is adhered to or otherwise fastened to an outer cylindrical surface 24 of wheel rim member 12. Inner cylindrical member 22 is of the same length as, coaxial to, and coextensive with outer cylindrical member 18.

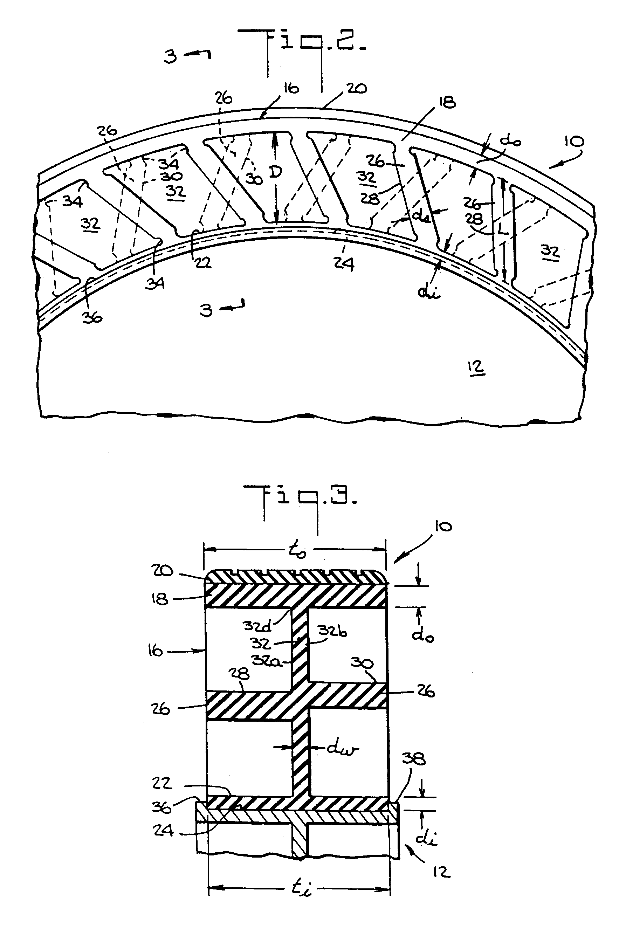

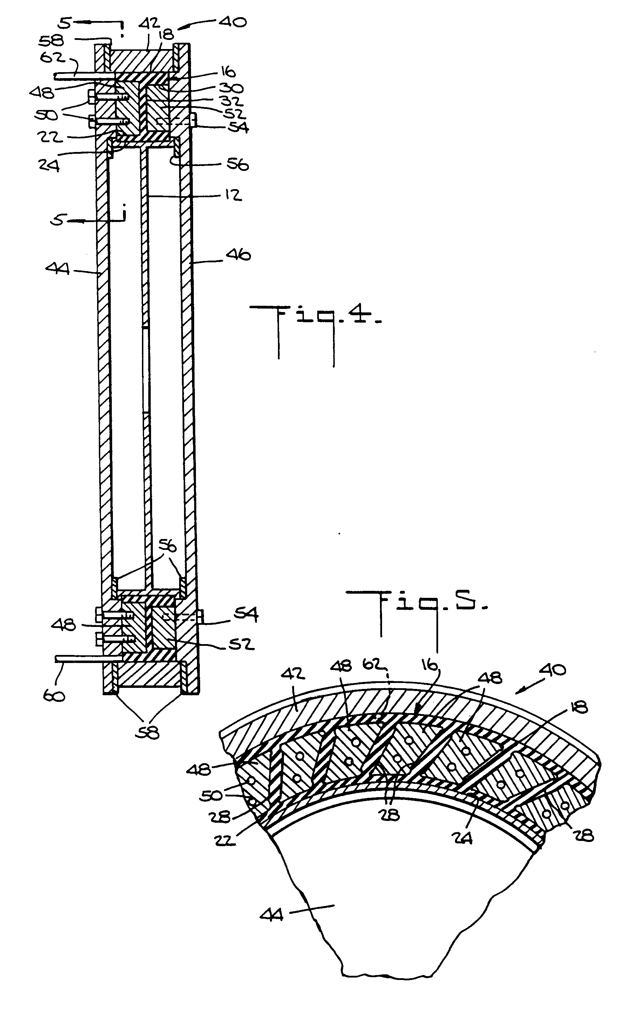

The outer cylinder member 18 is supported and cushioned by a plurality of circumferentially spaced-apart rib members 26, each of which includes a first axial portion 28 (Figure 3) and a second axial portion 30, and by a web member 32, which in this embodiment of the invention is planar and is connected on one of its side faces 32a to the first portion 28 of rib members 26 and is connected on its other side face 32b to the second portion 30 of rib members 26.

The planar web member 32 is positioned midway between the axial ends of the inner and outer cylindrical members 18 and 22. It is connected at its inner periphery 32c to the inner cylindrical member 22 and is connected at its outer periphery 32d to the outer cylindrical member 18. Similarly, the various rib members 26 (Figure 2) are connected at their radially inner ends to the inner cylindrical member 22 and at their radially outer ends to the outer cylindrical member 18. The ribs 26 are preferably undercut where their ends connect to the inner and outer cylindrical members, as shown at 34, to enhance flexibility of the connection.

The rib members 26 extend generally axially along the inner and outer cylindrical members 22 and 18 (Figure 3) and are inclined at an angle A (Figure 1) of 15° to 75° to radial planes R which intersect them at their junctions with the inner cylindrical member 22. The web member 32 (Figure 3) in this embodiment lies in a plane that is perpendicular to the rotational axis 14 of the tire 10.

In the preferred embodiment shown in Figure 1 to 3, the first axial rib member portions 28 and the second axial rib member portions 30 are each inclined at the same angle to the radial planes R which intersect them at their radially inner ends but the angles of the first portions 28 are preferably oppositely directed with respect to the radial planes R from the angles of the second portions 30. Thus, as viewed in Figure 3, the first rib portion 28 proceeds upwardly from the section lines to connect with the outer cylindrical member 18, while the second rib portion 30 proceeds downwardly from the section lines to connect with the inner cylindrical member 22.

The annular body portion 16 of the tire 10 preferably is formed with dimensions, dimensional relationships and angular relationships which fall within the broad, preferred and optimal ranges set forth in the following Table:

## TABLE I

| Item | Broad Range | Preferred Range | Optimal Range |
|---|---|---|---|
| $r_o$ | 15.24-91.44cm | 25.4 - 60.96cm | 30.48-45.72cm |
| A | 15-75° | 20-60° | 20-45° |
| $d_i, d_o$ | 0.16-5.08cm | 0.32-2.54cm | 0.32-1.27cm |

| Item | Broad Range | Preferred Range | Optimal Range |
|---|---|---|---|
| D | $r_o/10 = D = r_o/2$ | $r_o/7 = D = r_o/3$ | $r_o/6 = D = r_o/4$ |
| $r_o/D$ | 2/1 – 10/1 | 3/1 – 5/1 | 3.5/1 – 4.5/1 |
| $D/d_w$ | 40/1 – 5/1 | 25/1 – 8/1 | 12/1 – 10/1 |
| L (Value of L depends on the values of A and D selected) | | | |
| $L/d_s$ | 1/1 – 10/1 | 2/1 – 8/1 | 4/1 – 7/1 |
| $t_i, t_o$ | 1.27–60.96 cm | 2.54–30.48 cm | 5.08–20.32 cm |
| $r_i$ | 10.16–76.2 cm | 20.32–53.34 cm | 20.32–40.64 cm |

In Table 1 above, the various items refer to the correspondingly identified dimensions or angles illustrated in Figures 1 to 3, and are further defined as follows: "$r_o$" is the outer radius of the annular body 16, "A" is the inclination angle that the rib members 26 make with the radial planes R, "$d_i$" is the radial thickness of the inner cylindrical member 22, "$d_o$" is the radial thickness of the outer cylindrical member 18, "L" is the angularly directed length of the rib members 26, "D" is the radial distance from the outer surface of the inner cylindrical member 22 to the inner surface of the outer cylindrical member 18, "$d_w$" is the axial thickness of the web member 32, "$d_s$" is the thickness of the rib member 26 measured perpendicularly to its length L, "$t_i$" is the axial length of the inner cylindrical member 22, "$t_o$" is the axial length of the outer cylindrical member 18, and "$r_i$" is the radial dimension of the inner surface of the inner cylindrical member 22.

In a tire of the type shown in Figures 1 to 3, having the parameters set forth in Table 1 above, the rib members 26 are constrained to deform primarily in compression by the influence of the web member 32, which may be cast as an integral part of the structure. The web member 32 tends to prevent the rib members 26 from deforming in bending, and the effect is to greatly increase structural stiffness. The tire 10 has advantages over prior art non-pneumatic tires in that it is much easier to mold and demold and can have a variable spring rate (by varying the inclination angle of the rib members 26) without requiring changes in the type of material from which it is made. This variation of spring rate with inclination angle of the rib members can be accomplished without greatly increasing compression strains in the rib member. Although bending strains at the roots of the rib members increase, these strains can be minimized by employing undercuts 34 of appropriate radii at the junctions of the rib members 26 with the inner and outer cylindrical members 22 and 18. Preferably, the undercuts 34 have a radius of about 0.32 cm to 1.27 cm on the acute angle junctions of the rib members 26 with the inner and outer cylindrical members 22 and 18, and they have a radius of about 0.64 cm to 2.54 cm on the obtuse angle junctions of the rib members 28 with the inner and outer cylindrical members 22 and 18.

A significant advantage of the tire of this invention over the prior art structures is that its enveloping properties are much improved over such prior art structures. The rib member structures can deform locally and achieve their load bearing capability by deforming much like a pneumatic tire. Prior art structures are generally much less locally deflectable and must distribute their deflections in order to obtain low spring rates.

The annular body 16 may be adhered to the surface 24 of wheel rim 12 by being molded directly thereto in a liquid injection molding process, with the outer cylindrical surface 24 of the rim having been prepared in accordance with known processes to adheringly receive the elastomeric material of the body 16. Preferably, the wheel rim 12 is provided with radial flanges 36 and 38 which cooperate with the mold in forming the annular body 16 on the wheel rim surface 24. Alternative methods of mounting the tire body 16 on the wheel rim 12 are discussed hereinafter.

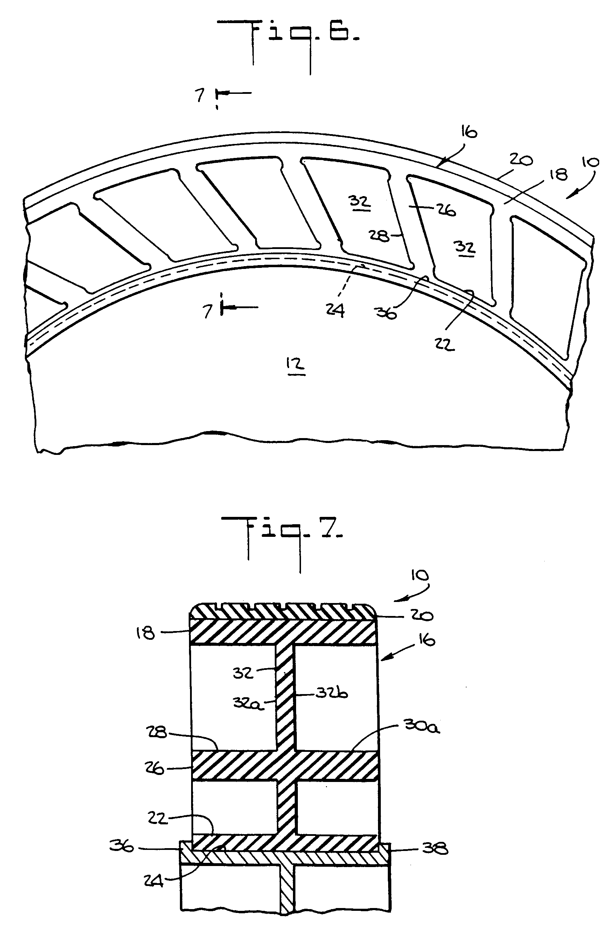

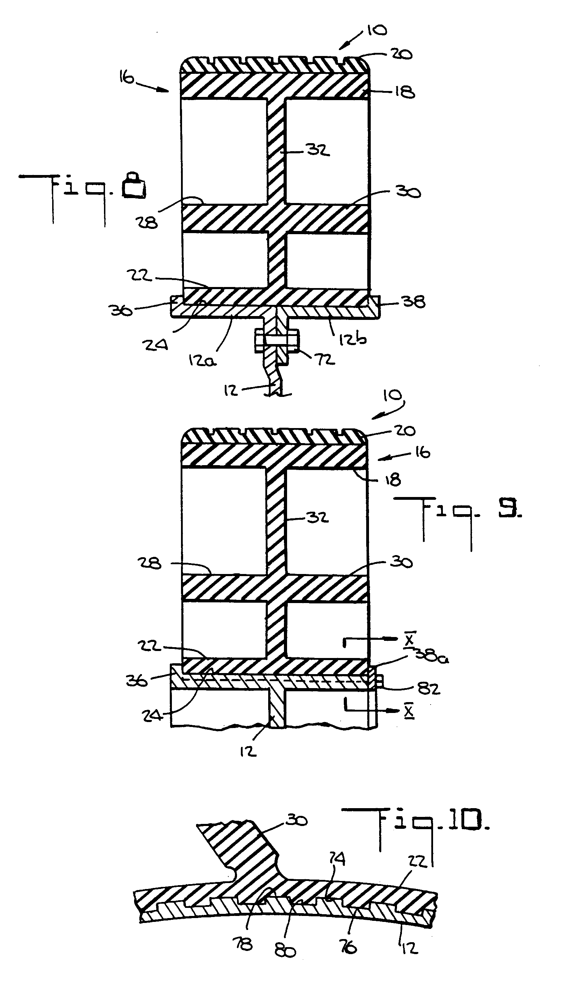

Referring now to Figures 4 and 5, a preferred method for manufacturing the tire 10, which method employs a mold shown generally at 40, will now be considered. The mold comprises an outer mold ring 42 which defines the outside diameter of the tire, and two mold plates 44, 46 which define the side edges of the annular body 16. Mold plate 44 is provided with a plurality of inserts 48 which are releasably fastened to the mold plate 44 by means of bolts 50. The inserts 48 are generally rhomboidally shaped and circumferentially spaced apart from one another so as to form the first axial portions 28 of rib members 26 between them during the molding operation.

Similarly, mold plate 46 is provided with a plurality of inserts 52 which are bolted thereto by bolts 54 with the inserts 52 being generally rhomboidally shaped and circumferentially spaced apart from one another to form the second axial portions 30 of rib members 26. The inside diameter of the annular body 16 is formed by the outer cylindrical surface 24 of the wheel rim 12.

Suitable pairs of inner, annular flat washers 56 and outer, annular flat washers 58 are employed to space the mold plates 44 and 46 from the radial flanges of the wheel rim 12, in the case of the inner washers 56, and to space the mold plates 44 and 46 from the outer mold ring 42, in the case of the outer washers 58. The axial thickness of the washers 56 and 58 determine the axial thickness of the web member 32 and these may be varied depending on design conditions specified for the annular body 16.

Similarly, the inserts 48 on mold plate 44 and the inserts 52 on mold plate 46 may be removed and replaced by corresponding inserts of different configuration when it is desired to change either the angular orientation or the thickness of the rib member portions 28 and 30, in accordance with desired design changes. An inlet spout 60 is provided for supplying liquid material to the mold from a source (not shown) during the mold filling operation, and an outlet valve 62 is provided to allow air to be removed from the mold during the filling operation.

An alternative method of making the annular body 16 would employ, in place of the wheel rim 12, an inner mold ring (not shown) similar in configuration to the outer mold ring 42 but of lesser, appropriate diameter. After the annular body 16 has been molded and post-cured in this alternate method,the annular body 16 would be glued to a machined aluminium rim using a polyurethane adhesive.

Example 1 below provides details with respect to a non-pneumatic tire that was made in accordance with the preferred embodiment.

EXAMPLE 1

The non-pneumatic tire that was prepared had the following dimensions:

| | |
|---|---|
| $r_o$ | 26.04 cm |
| A | 45° |
| $d_i, d_o$ | 0.51 cm, each |
| D | 4.570 cm |
| $r_o/D$ | 5.5 |
| $D/d_w$ | 8.2 |
| L | 5.72 cm |
| $L/d_s$ | 6.4 |
| $t_i, t_o$ | 6.1 cm, each |
| $r_i$ | 20.45 cm |

The tire was made in a mold similar to that shown in Figures 4 and 5, but having an inner mold ring substituted in place of the wheel rim 12, as discussed above as an alternative method of making the annular body 16. The resulting mold was filled with a reaction mixture of (a) tolylenediisocyanate-poly-(tetramethylene ether) glycol, (M.W. 2000), prepolymer having an NCO number of 5.45 and an amine equivalent of 767 and (b) a methylenedianiline-NaCl complex curative (50% by weight in dioctyl phthalate), the (a)/(b) weight ratio being 1/0.27. Prior to mixing the foregoing components, the tolylenediisocyanate-poly(tetramethylene ether) glycol was heated to 65° and the methylenedianiline-NaCl complex curative was heated to 27°C. The mold was also preheated to 65°C prior to introducing the reaction mixture.

The reaction mixture was added to the mold under about 450 kPa pressure with care being taken to ensure that all air in the mold was displaced by the liquid reaction mixture that was being added.

Once the mold was filled, it was placed for about one hour in an oven (set for 121°C) for the purpose of curing the polyurethane. Subsequently, the mold was opened, the polyurethane annular body 16 was removed and the body was post-cured for about 16 hours at 70°C.

A simple tire tread having a thickness of about 0.6 cm was then glued onto the outer cylindrical member 18 using a methyl 2-cyanoacrylate adhesive and the resulting tire was fitted and glued onto a steel rim member 12 using a polyurethane adhesive cured with an organic isocyanate curative. The resulting tire and wheel assembly, in turn, was used to replace a conventional passenger car tire and wheel assembly. A car with the foregoing tire and wheel assembly was driven at speeds of up to 64 km/hr without deleteriously affecting control of the car and without damage to the non-pneumatic tire of this invention.

Referring now to Figures 6 and 7 an alternative embodiment of the tire 10 has been shown. In these as well as in the remaining figures of this specification, parts corresponding to the parts illustrated in Figures 2 and 3 have been identified by the same numerals.

In the embodiment of Figures 6 and 7, the construction of the annular body 16 is essentially similar to that of the foregoing embodiment except that the angular orientation of the second axial portions 30a of rib members 26 has been reversed from the angular orientation of the second axial portions 30 of the rib members 26 in Figures 2 and 3, so that the second axial portions 30a of Figures 6 and 7 are in direct axial alignment with the first axial portions 28 of the rib members 26. This arrangement provides slightly different ride and handling characteristics from those of the embodiment shown in Figures 2 and 3.

The annular body 16 of Figures 6 and 7 is manufactured in a manner similar to that of the first embodiment described herein. In this case the inserts 52 (Figure 4) would be removed and replaced by a new set of inserts having their rhomboidal shapes angularly oriented in a direction opposite to the direction in which they are oriented in Figure 4.

Referring now to Figure 8 an embodiment similar to the embodiment of Figures 6 and 7 has been shown in connection with the use of a split wheel rim having a first axial portion 12a and second axial portion 12b thereon. The two halves of the wheel rim are bolted together by bolts 72 and each is provided with a corresponding flange 36 and 38 to assist in retaining the annular body 16 in axial position on the wheel rim 12. The split rim arrangement of Figure 8 facilitates mounting of an annular body 16 onto the wheel rim 12 when the annular body has been separately molded from the wheel rim.

Referring now to Figures 9 and 10, yet another embodiment of this invention is shown in which extra provision is made for preventing slippage between the wheel rim and the inner cylindrical member 22 during acceleration and deceleration of the tire and wheel rim assembly. In this case the inner surface of the inner cylindrical member 22 is provided with axially extending, circumferentially spaced depressions 74 and raised portions 76, and the outer surface 24 of the wheel rim 12 is provided with corresponding raised portions 78 and depressions 80 which interengage with the depressions and raised portions of the inner cylindrical member to prevent relative rotation therebetween. As before, one end of the outer portion of wheel rim 12 is provided with a raised annular flange 36 thereon which abuts the inner cylindrical member 22, and the outer end of the outer portion of wheel rim 12 is provided with a removable raised flange 38a which is bolted thereto by bolts 82.

To mount the tire 10 onto the wheel rim 12 the removable flange 38 is unbolted and removed from the rim. Then, the various raised portions and depressions of the inner cylindrical member 22 are the outer surface 24 of the rim are coated with an adhesive and aligned, and the tire 10 is slid onto the rim 12. Thereafter, the removable flange 38a is bolted back onto the rim 12 and the adhesive bonding is allowed to cure before usage. The curing may be facilitated by placing the assembly in a suitable oven at an approximate temperature for an appropriate length of time depending upon the adhesive used.

## Claims

1. A tire and wheel rim assembly comprising a tire (10) having elastomeric material with a generally cylindrical outer member (18) at the outer periphery thereof, a generally cylindrical inner member (22) spaced radially inward from and coaxial with said outer member, a plurality of axially extending, circumferentially spaced-apart rib members (26) connected at their corresponding radially inner and outer ends to said inner and outer cylindrical members, and at least one web member (32) having opposite side faces, said web member having its radially inner and outer peripheries connected respectively to said inner and outer cylindrical members and being connected on at least one of its side faces to at least one of said rib members to thereby form with said rib member a load-carrying and cushioning structure for said outer cylindrical member, a tread (20) carried on the outer surface of said outer cylindrical member (18), a wheel rim member (12) and means for mounting the inner surface of said inner cylindrical member (22) of said tire on a generally cylindrical outer surface (24) of said wheel rim member in non-rotative engagement therewith; characterised in that said web member (32) is planar, is perpendicular to the rotational axis of the tire and is positioned about half way intermediate the axial ends of said cylindrical members (18, 22), in that each of said rib members (26) is (a) generally inclined at an angle of about 15° to 75° to a radial plane which intersects it at its radially inner end, (b) extends axially of said web member (32) and has a portion lying to each side of and connected to the respective side face of said web member and (c) is formed with undercuts (34) at its junction with the outer and with the inner cylindrical members (18 and 22), and in that said elastomeric material has a Shore hardness value of from 80A to 50D, and a compression modulus at 0.5 shape factor and 10% compression of from 6.9 x $10^3$ to 344 x $10^3$kPa, preferably from 20.7 x $10^3$ to 62.1 x $10^3$kPa.

2. An assembly as claimed in claim 1 wherein said means for mounting said inner cylindrical member (22) of said tire on said wheel rim member includes an adhesive adhering the inner surface of said inner cylindrical member (22) to the outer surface (24) of said wheel rim member (12).

3. An assembly as claimed in claim 1 or claim 2 wherein said wheel rim member (12) has an axial length substantially equal to the axial length of said inner cylindrical member (22) of said tire, and wherein said wheel rim member is provided with a radially outwardly directed flange (36, 38) at each of its axial ends, said flange being in abutment with the axial ends of said inner cylindrical member.

4. An assembly as claimed in claim 3 wherein said wheel rim member comprises first and second axial rim portions (12a, 12b) which are separable from one another, and further including fastening means (72) for releasably locking said rim portions to one another (figure 8).

5. An assembly as claimed in any one of claims 1 to 4 wherein said inner surface of said inner cylindrical member of said tire and said outer surface of said wheel rim member are each provided with axially extending, circumferentially spaced depressions and raised portions (74 to 80), and wherein the depressions of each of said members are engaged by the raised portions of the other of said members to inhibit relative rotation between said members (figures 9 and 10).

**Patentansprüche**

1. Reifen- und Radfelgenaufbau mit einem Reifen (10) aus elastischem Polymer mit einem im allgemeinen zylindrischen, äußeren Bauteil (18) an dessen Außenrand, mit einem im allgemeinen zylindrischen, inneren Bauteil (22), das radial einwärts von und koaxial zu dem äußeren Bauteil beabstandet ist, mit einer Vielzahl von in Umfangsrichtung beabstandeten, axial verlaufenden Rippenbauteilen (26), die an ihren entsprechenden radial inneren und äußeren Enden mit den inneren und äußeren zylindrischen Bauteilen verbunden sind, und mit wenigstens einem Stegbauteil (32), das gegenüberliegende Seitenflächen aufweist, wobei das Stegbauteil mit seinen radial inneren und äußeren Rändern mit den inneren bzw. äußeren, zylindrischen Bauteilen verbunden ist und an wenigstens einer seiner Seitenflächen mit wenigstens einem der Rippenbauteile verbunden ist, um dadurch mit dem Rippenbauteil einen eine Last aufnehmenden und dämpfenden Aufbau für das äußere, zylindrische Bauteil zu bilden, mit einer Lauffläche (20), die auf der Außenfläche des äußeren, zylindrischen Bauteils (18) gehalten wird, mit einem Radfelgenbauteil (12) und mit Einrichtungen zum Montieren der Innenfläche des inneren, zylindrischen Bauteils (22) des Reifens auf eine im allgemeinen zylindrische Außenfläche (24) des Radfelgenbauteils in nicht drehendem Eingriffszustand; **dadurch gekennzeichnet, daß** das Stegbauteil (32) eben, senkrecht zu der Rotationsachse des Reifens und ungefähr mittig zwischen den axialen Enden der zylindrischen Bauteile (18, 22) angebracht ist, **daß** jedes der Rippenbauteile (26)
    (a) im allgemeinen zu einer radialen Ebene, die es-an seinem radial inneren Ende schneidet, unter einem Winkel von ungefähr 15° bis 75° geneigt ist,
    (b) sich axial von dem Stegbauteil (32) erstreckt und einen Abschnitt aufweist, der zu jeder Seite der entsprechenden Seitenfläche liegt und mit der entsprechenden Seitenfläche des Stegbauteils verbunden ist und
    (c) mit Hinterschneidungen (34) an seinen Verbindungsstellen mit den äußeren und inneren, zylindrischen Bauteilen (18 und 22) ausgebildet ist, und **daß** das elastische Polymer einen Shore-Härtewert von 80A bis 50D aufweist und einen Kompressionsmodul bei einem Formfaktor von 0,5 und einer Kompression von 10% von 6,9 x $10^3$ bis 344 x $10^3$ kPa, vorzugsweise von 20,7 x $10^3$ bis 62,1 x $10^3$ kPa hat.

**2.** Aufbau nach Anspruch 1, in dem die Einrichtung zum Montieren des inneren, zylindrischen Bauteils (22) des Reifens auf dem Radfelgenbauteil einen Klebstoff enthält, der die Innenfläche des inneren, zylindrischen Bauteils (22) mit der Außenfläche (24) des Radfelgenbauteils (12) zusammenklebt.

**3.** Aufbau nach Anspruch 1 oder 2, in dem das Radfelgenbauteil (12) eine axiale Länge aufweist, die im wesentlichen gleich der axialen Länge des inneren, zylindrischen Bauteils (22) des Reifens ist, und wobei das Felgenbauteil mit einem radial nach außen gerichteten Flansch (36,38) an jedem seiner axialen Enden versehen ist, wobei der Flansch in Anlage mit den axialen Enden des inneren, zylindrischen Bauteils ist.

**4.** Aufbau nach Anspruch 3, in dem das Radfelgenbauteil erste und zweite axiale Felgenabschnitte (12a, 12b) enthält, die voneinander trennbar sind und weiterhin ein Befestigungsmittel (72) einschließt, um die Felgenabschnitte lösbar miteinander zu verbinden (Figur 8).

**5.** Aufbau nach einem der Ansprüche 1 bis 4, in dem die Innenfläche des inneren, zylindrischen Bauteils des Reifens und die Außenfläche des Radfelgenbauteils jeweils mit in Umfangsrichtung beabstandeten, sich axial erstreckenden Vertiefungen und erhöhten Abschnitten (74 bis 80) versehen sind, und wobei die Vertiefungen von jedem Bauteil mit den erhöhten Abschnitten der anderen Bauteile in Eingriff stehen, um eine relative Drehung zwischen den Bauteilen zu verhindern (Figuren 9 und 10).

## Revendications

**1.** Assemblage d'un bandage et d'une jante de roue comprenant un bandage (10) ayant un matériau élastomère avec un organe externe généralement cylindrique (18) à la périphérie externe de celui-ci, un organe interne généralement cylindrique (22) disposé radialement vers l'intérieur et coaxialement audit organe externe, une pluralité d'organes formant nervures (26) qui s'étendent axialement et qui sont disposés à distance sur la circonférence, connectés par leurs extrémités correspondantes radialement interne et externe auxdits organes cylindriques interne et externe et au moins un organe formant nervure (32) qui possède des faces latérales opposées, ledit organe formant nervure ayant ses périphéries radialement interne et externe connectées respectivement auxdits organes cylindriques interne et externe et étant connecté sur au moins l'une de ses faces latérales à au moins l'un desdits organes formant nervures pour ainsi former, avec ledit organe formant nervure, une structure de support de charge et d'amortissement pour ledit organe cylindrique externe, une bande de roulement (20) portée sur la surface externe dudit organe cylindrique externe (18), un organe formant jante de roue (12) et un moyen pour monter la surface interne dudit organe cylindrique interne (22) dudit bandage sur une surface externe généralement cylindrique (24) dudit organe formant jante de roue en engagement non rotatif ; caractérisé en ce que ledit organe formant nervure (32) est plan,est perpendiculaire à l'axe de rotation du bandage et est placé à peu près à mi-chemin entre les extrémités axiales desdits organes cylindriques (18, 22), en ce que chacun desdits organes formant nervures (26) est (a) généralement incliné à un angle d'environ 15° à 75° sur un plan radial qui le coupe à une extrémité radialement interne, (b) s'étend axialement audit organe formant nervure (32) et a une portion qui se trouve de chaque côté de et est connectée à la face latérale respective dudit organe formant nervureet (c) présente des dépouilles (34) à sa jonction avec les organes cylindriques externe et interne (18 et 22) et en ce que ledit matériau élastomère a une valeur de dureté shore de 80A à 50D et un module de compression à un facteur de forme de 0,5 et à 10% de compression de $6,9 \times 10^3$ à $344 \times 10^3$kPa, de préférence de $20,7 \times 10^3$ à $62,1 \times 10^3$kPa.

**2.** Assemblage selon la revendication 1, dans lequel ledit moyen pour monter ledit organe cylindrique interne (22) dudit bandage sur ledit organe formant jante de roue comporte un adhésif qui fait adhérer la surface interne dudit organe cylindrique interne (22) à la surface externe (24) dudit organe formant jante de roue (12).

**3.** Assemblage selon la revendication 1 ou la revendication 2, dans lequel l'organe formant jante de roue (12) a une longueur axiale qui est sensiblement égale à la longueur axiale dudit organe cylindrique interne (22) dudit bandage, et où ledit organe formant jante de roue est pourvu d'un épaulement dirigé radialement vers l'extérieur (36, 38) à chacune de ses extrémités axiales, ledit épaulement étanten aboutement avec les extrémités axiales dudit organe cylindrique interne.

4. Assemblage selon la revendication 3, dans lequel ledit organe formant jante de roue comprend des première et seconde portions axiales de jante (12a, 12b) qui sont séparables l'une de l'autre et comprenant de plus un moyen de fixation (72) pour le blocage amovible desdites portions de jante l'une à l'autre (figure 8).

5. Assemblage selon l'une quelconque des revendications 1 à 4, où ladite surface interne dudit organe cylindrique interne dudit bandage et ladite surface externe dudit organe formant jante de roue sont pourvues de dépressions s'étendant axialement, circonférentiellement espacées et de portions (74 à 80) et où les dépressions de chacun desdits organes sont en engagement avec les portions surélevées de l'autre desdits organes pour inhiber une rotation relative entre lesdits organes (figures 9 et 10).

Fig. 1.

Fig.2.

Fig.3.

Fig.4.

Fig.5.

Fig. 6.

Fig. 7.

Fig. 8.

Fig. 9.

Fig. 10.